# EUROPÄISCHE PATENTANMELDUNG

(11) **EP 0 663 734 A1**
(43) Veröffentlichungstag der Anmeldung: **19.07.1995**
(21) Anmeldenummer: 95100209.6
(22) Anmeldetag: 09.01.1995
(51) Int. Cl.: H04B 1/38, H01Q 1/24

(54) **Handfunkgerät**

(30) Priorität: 13.01.1994 DE 4400823
(71) Anmelder: SIEMENS AKTIENGESELLSCHAFT, D-80333 München (DE)
(72) Erfinder: Zibert, Klaus, Dr., D-83607 Holzkirchen (DE)

(57) **Zusammenfassung**

Die Höreinrichtung des Handfunkgerätes ist als ein vom Gerätegehäuse wegklappbarer Teil ausgebildet derart, daß sie sich im ausgeklappten Zustand in einer Position mit größtmöglichem Abstand zur Geräteantenne befindet.

## Beschreibung

Die Erfindung bezieht sich auf ein Handfunkgerät mit einem Sender/Empfänger, mit Hör- und Sprecheinrichtungen und einer zugehörigen Geräteantenne.

Handfunkgeräte sind in verschiedenen Ausführungsformen, z.B. als Handgeräte von sogenannten schnurlosen Telefonen, City-Funkgeräte (CB-Funkgeräte, Walkie-Talkies) oder als Handgeräte (Handhelds) für den Mobilfunk verfügbar. Derartige Geräte sind üblicherweise mit einer Antenne versehen, die sich bei normaler Betriebshaltung in unmittelbarer Nähe des Kopfes des Benutzers befindet. Im Sendebetrieb emittiert die Antenne elektromagnetische Funksignale u.a. in Richtung des Kopfes. Außerdem wirkt der Kopf abschattend für die Funksignale.

In jüngster Zeit ist eine Diskussion über eine mögliche negative physiologische Beeinflussung des menschlichen Körpers, insbesondere des Kopfes, durch die elektromagnetischen Funksignale entstanden. Zuverlässige Erkenntnisse liegen hierüber jedoch noch nicht vor.

In der EP 0 509 299 A1 ist ein Handfunkgerät beschrieben, bei dem zur Vorbeugung gegen den möglichen negativen Einfluß der Funksignale der Fußpunkt des strahlenden Teils der Antenne des Handgerätes über dem Gehäuse erhöht angeordnet ist. Zu diesem Zweck ist zwischen dem strahlenden Teil und dem Gehäuse ein nichtstrahlender Teil als Abstandhalter vorgesehen. Durch eine derartige Ausgestaltung der Antenne gelangt nur noch ein unbedeutender Teil der elektromagnetischen Strahlung in den Kopf des Benutzers.

Bei einem in der EP 0 532 960 A1 beschriebenen Funkgerät ist eine versenkbare Stabantenne vorgesehen, die aus einem hohlzylindrischen, in das Gehäuse des Gerätes versenkbaren bzw. umklappbaren, nichtstrahlenden Teil (Abstandshalter) und einem im Abstandshalter teleskopartig verschiebbar geführten strahlenden Teil besteht.

Der Erfindung liegt die Aufgabe zugrunde, ein Handfunkgerät anzugeben, bei dem die im Sendebetrieb an den Kopf des Benutzers abgegebene elektromagnetische Strahlung noch weiter vermindert wird.

Diese Aufgabe wird bei einem Handfunkgerät der eingangs beschriebenen Art gemäß der Erfindung in der Weise gelöst, daß die Höreinrichtung als ein vom Gerätegehäuse wegklappbarer Teil ausgebildet ist derart, daß sie sich im ausgeklappten Zustand in einer Position mit größtmöglichem Abstand zur Geräteantenne befindet.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

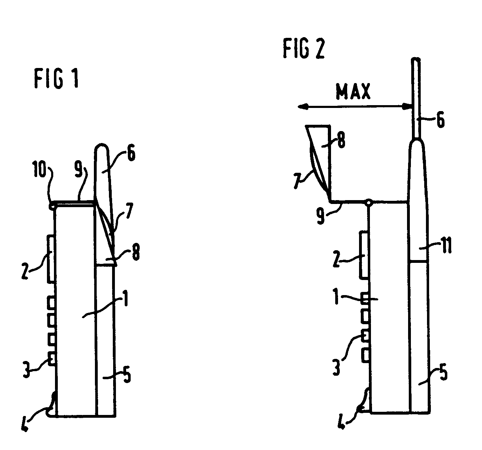

In den Figuren 1 und 2 ist ein Handfunkgerät 1 jeweils in der Seitenansicht in Ruheposition und in Aktivposition dargestellt. Das Handfunkgerät 1 enthält an seiner Vorderseite im oberen Bereich ein Display 2, darunterliegend eine Tastatur 3 und im unteren Bereich ein Mikrofon 4. An der Rückseite sind in einem Gehäusefach Batterien 5 angeordnet. Die Antenne 6 ist in einem Ansatz an der Oberseite des Handfunkgerätes 1 angeordnet und einschiebbar ausgebildet. Die Hörkapsel 7 ist in einem Geräteteil 8 angeordnet, der schwenkbar mit dem Gerätegehäuse verbunden ist. Hierzu ist der die Hörkapsel 7 enthaltende Gehäuseteil 8 an einem Ausleger 9 befestigt, der in einem an der vorderen oberen Stirnseite des Gerätegehäuses angeordneten Drehgelenk 10 gelagert ist. In der aktiven Position des Handfunkgerätes 1 ist der die Hörkapsel 7 enthaltende Gehäuseteil 8 vom Handfunkgerät 1 weggeklappt derart, daß sich die Hörkapsel 7 in größtmöglichem Abstand zur Geräteantenne 6 in einer der Frontseite des Handfunkgerätes 1 vorgelagerten Ebene befindet. In der Ruheposition befindet sich der die Hörkapsel 7 enthaltende Gehäuseteil 8 in zurückgeklappter Lage in einem seitlich abgestuften Bereich 11 des Gerätegehäuses. Durch diese ausklappbare Anordnung der Hörkapsel 7 läßt sich der Abstand zwischen Antenne 6 und Hörkapsel und damit dem Kopf maximieren. Im dargestellten Beispiel beträgt der Abstand zwischen Antenne und Hörkapsel, also zwischen Antenne und Kopf etwa die doppelte Tiefe des Handfunkgerätes. Dieser Abstand läßt sich durch eine entsprechende Ausbildung und Bemessung des Auslegers und durch eine ggf. erhöhte Anzahl von Drehgelenken noch vergrößern.

## Patentansprüche

1. Handfunkgerät mit einem Sender/Empfänger, mit Hör- und Sprecheinrichtungen und einer zugehörigen Geräteantenne, **dadurch gekennzeichnet,**
daß die Höreinrichtung als ein vom Gerätegehäuse wegklappbarer Teil ausgebildet ist derart, daß sie sich im ausgeklappten Zustand in einer Position mit größtmöglichem Abstand zur Geräteantenne befindet.

2. Handfunkgerät nach Anspruch 1,
**dadurch gekennzeichnet,**
daß sich die Höreinrichtung bei aktiver Geräteeinstellung in einer der Frontseite des Handfunkgerätes vorgelagerten Ebene befindet.

3. Handfunkgerät nach Anspruch 1 oder 2,
**dadurch gekennzeichnet,**
daß die Höreinrichtung in einem schwenkbar mit dem Gerätegehäuse verbundenen Gehäuseteil angeordnet ist.

4. Handfunkgerät nach einem der Ansprüche 1 bis 3,
**dadurch gekennzeichnet,**
daß ein Drehgelenk mit dem Drehpunkt für das die Höreinrichtung enthaltende Gehäuseteil an der vorderen oberen Stirnseite des Gerätegehäuses angeordnet ist.

5. Handfunkgerät nach einem der Ansprüche 1 bis 4,
**dadurch gekennzeichnet,**
daß der die Höreinrichtung enthaltende Gehäuseteil sich in der Ruhestellung in einem seitlich abgestuften Bereich des Gerätegehäuses befindet.
